# EUROPÄISCHE PATENTSCHRIFT

(11) **EP 3 216 943 B1**
(45) Veröffentlichungstag und Bekanntmachung des Hinweises auf die Patenterteilung: **14.11.2018**
(21) Anmeldenummer: 17159489.8
(22) Anmeldetag: 07.03.2017
(51) Int. Cl.: E04F 15/20

(54) **UNTERLAGSDÄMMBELAGELEMENTE FÜR PARKETT UND LAMINATBÖDEN MIT SEITLICHEN STECKVERBINDUNGEN UND HAFTSTREIFEN**
UNDERLAY-INSULATION-ELEMENTS FOR PARQUET AND LAMINATE FLOORS WITH SIDE CONNECTORS AND ADHESIVE STRIPS
ÉLÉMENTS DE SOUS-COUCHE D'ISOLATION POUR PARQUET ET SOL STRATIFIÉ COMPRENANT DES RACCORDS LATÉRAUX ET BANDES ADHÉSIVES

(30) Priorität: 08.03.2016 DE 202016101245 U
(43) Veröffentlichungstag der Anmeldung: 13.09.2017
(73) Patentinhaber: SELIT Dämmtechnik GmbH, 55234 Erbes-Büdesheim (DE)
(72) Erfinder: Seitner, Marco, 55234 Erbes-Büdesheim (DE)
(74) Vertreter: Mackert, Andreas

(56) Entgegenhaltungen:
- WO-A1-2014/139294
- WO-A1-2014/167000
- US-A1- 2011 011 020
- US-A1- 2013 122 237

## Beschreibung

Die Erfindung betrifft Unterlagsdämmbelagelemente zur Anordnung zwischen einem Unterboden und darüber verlegten begehbaren Bodenbelägen nach dem Oberbegriff des Anspruchs 1.

Es ist bekannt, derartige aus Einzelelementen zusammengesetzte Unterlagsdämmbeläge als Zwischenlage zwischen einem Unterboden, in der Regel einem Estrich, und dem darüber angeordneten begehbaren Bodenbelag, beispielsweise einem Laminatbelag, anzuordnen, um eine Reduzierung der Schallentwicklung bei dem Begehen des Bodenbelages im Raum und insbesondere für darunter liegende und benachbarte Räume und zudem eine Abfederung des Bodenbelages und somit eine Erhöhung des Gehkomforts zu erreichen.

Bei der Einbringung der Unterlagsdämmbelagelemente werden diese auf dem Unterboden angeordnet. Hierbei kann der Unterlagsdämmbeläg von einer Rolle in beispielsweise der Breite 100 cm abgerollt und auf die Länge eines Raumes zugeschnitten werden. Hierbei werden mehrere Unterlagsdämmbelägbahnen zur Abdeckung der Bodenfläche nebeneinander angeordnet.

Desweiteren sind Unterlagsdämmbelagplatten verfügbar, die beispielsweise im Format 80 auf 60 cm verlegt werden, wie auch Faltplatten, die zu einer langen Unterlagsdämmbelagbahn entfaltet werden, beispielsweise im Format 120 cm Breite und ca. 8 bis 15 Meter Länge bei einer Faltung im Abstand von je ca. 25 cm.

Um eine sichere und flächige Verlegung des Unterlagsdämmbelages zu erreichen, ist aus dem Stand der Technik bekannt, an den Kanten der Unterlagsdämmbelagelemente Steckverbindungen anzuordnen, insbesondere bei Platten und Faltplatten.

Aus der Schrift DE 20 2005 017 040 ist bereits ein Unterlagsdämmbelag für Parkett- und Laminatböden bekannt, der über seitlich angeordnete Steckverbindungsmittel verfügt, die eine formschlüssige Verbindung der einzelnen Unterlagsdämmbelagelemente miteinander bewirkt. Auf diese Weise ist es grundsätzlich möglich, die sichere Verbindung zwischen den einzelnen Unterlagsdämmbelagelementen sowohl bei Rollenbahnen als auch in Plattenform zu ermöglichen.

Allerdings hat es sich in der Praxis herausgestellt, dass eine derartige Formgebung allein nicht ausreicht, um die Steckverbindung gegen ein unbeabsichtigtes Lösen zu sichern, insbesondere wenn die verwendeten Unterlagsdämmbeläge eine nur geringe Dicke aufweisen oder bei Rollenware eine Bogenspannung aufweisen, die einem flachen Aufliegen der Unterlagsdämmbeläge auf dem Unterboden entgegenwirkt.

So hat sich gezeigt, das bspw. bei Belagsdicken von 5 mm und weniger die mit den Steckverbindungsmitteln verbundenen Unterlagsdämmbelagelemente sich wieder lösen können, insbesondere, wenn diese aufgrund Ihrer Vorlage in Rollenform oder auch in gefalteten Bahnen aufgrund der Bogenspannung nicht völlig plan am Boden anliegen. Es kann somit zum Lösen der Steckverbindung kommen und zum Verschieben der bereits am Boden angeordneten Unterlagsdämmbelagelemente, wodurch die Arbeit verzögert wird.

Auch hier wurden im Stand der Technik spezielle Lösungen vorgestellt, die bei dünnen Unterlagsdämmbelägen die Haftung der Steckverbindungen verbessern sollen.

So ist aus der Offenlegungsschrift DE 20 2009 017 368 U1 ein Unterlagsdämmbelag zur Anordnung zwischen einem Unterboden und darüber verlegten begehbaren Bodenbelägen umfassend eine Steckverbindung an zumindest zwei Seiten der Unterlagsdämmbelagelemente bekannt, bei dem die Steckverbindungen zumindest einseitig an ihren ineinander greifenden Stoßkanten eine profilierte Oberfläche aufweisen. Durch diese Kontur der Stoßkanten kommt des zu einer besseren Haftung der Oberflächen der Stoßkanten aneinander, was die Festigkeit der Steckverbindung verbessert.

Allerdings hat sich gezeigt, dass diese profilierten Oberflächen allein insbesondere bei dünnen Unterlagsdämmbelägen, die gleichzeitig aufgrund der Verpackungseinheit als Rollenware eine Bogenspannung aufweisen, weiterhin ein Lösen der Steckverbindungen beim Verlegen der Unterlagsdämmbeläge nicht sicher verhindern können, wodurch es zu unerwünschten Verschiebungen der Unterlagsdämmbeläge zueinander kommen kann.

Aus der Offenlegungsschrift US 2013/122237 A1 ist eine Schaumbasis bekannt, die eine Verbindungsstruktur umfasst aus Schaumbasis und einem. Das Verbindungselement umfasst einen Klebeverbindungsabschnitt und einen Faltabschnitt, wobei das Verbindungselement mit dem Klebeverbindungsabschnitt an der Schaumbasis befestigt ist. Der Faltabschnitt wird verwendet, um eine andere benachbarte Schaumbasis mit dieser zu verbinden.

Die Offenlegungsschrift WO 2014/167000 A1 betrifft einen Bodenbelagselement auf Polymerbasis, der ausklappbare Verbindungsmittel aufweist, um das Bodenbelagselement mit einem oder mehreren benachbarten Bodenbelagselementen zu verbinden.

Die Offenlegungsschrift US 2011/011020 A1 betrifft eine ineinandergreifende Kunststofffliesenstruktur mit Steckverbindungen, wobei abgestufte Fortsätze an einer Kante einer Kunststofffliese in als Vertiefungen ausgebildete Aufnahmen einer benachbarten Kunststofffliese eingreifen, wobei der Boden dieser Aufnahmen mit Permanentklebstoff beschichtet ist.

Schließlich offenbart die Offenlegungsschrift WO 2014/139294 A1 ein Bodenbelagselement mit stufenartigen Steckverbindungen und einem unterseitigen Haftstreifen, um eine flächige Verbindung zwischen den Bodenbelagselementen zu bewirken.

Die Aufgabe der vorliegenden Erfindung ist es vor diesem Hintergrund, Unterlagsdämmbelagelemente zur Anordnung zwischen einem Unterboden und darüber verlegten begehbaren Bodenbelägen umfassend eine Steckverbindung an zumindest zwei Seiten der Unterlagsdämmbelagelemente zur lückenlosen und flächigen Verbindung der Unterlagsdämmbelagelemente zu einem flächigen Unterlagsdämmbelag zu schaffen, der eine sichere Verbindung der einzelnen Unterlagsdämmbelagelemente auch bei nur geringen Dicken dieser Elemente ermöglicht. Es soll hierbei erreicht werden, dass die bekannten Steckverbindungen durch die erfinderische Lösung auch Unterlagsdämmbeläge sicher an Ihren Kanten verbinden, die eine Bogenspannung aufweisen aufgrund einer Verpackungseinheit bspw. als Rollenware oder aufgrund einer durch eine aufkaschierte Folie eingebrachte Bogenspannung in den Dämmunterlagen.

Erreicht wird dies nach der Erfindung durch Unterlagsdämmbelag mit den Merkmalen des Anspruchs 1.

Die Unteransprüche haben vorteilhafte Ausgestaltungen der Erfindung zum Gegenstand.

Der erfinderische Grundgedanke der Erfindung besteht nun darin, die Verbindung der Steckverbindung dadurch zu verbessern, dass eine unterstützende Haftverbindung der in Aufnahmen eingesetzten Fortsätze der Steckverbindungen erfolgt. Hierfür ist vorgesehen, auf der Rückseite bzw. Unterseite der Unterlagsdämmbeläge einen Haftstreifen derart anzuordnen, dass dieser mit seiner haftenden Oberfläche in den Aufnahmen der Steckverbindungen nach oben weisend angeordnet ist.

Auf diese Weise wird erreicht, dass die in die Aufnahmen eingesetzten Steckverbindungsfortsätze mit ihrer Unterseite auf der haftenden Oberfläche dieser Haftstreifen zum Aufliegen kommen und es hier zu einer Haftverbindung kommt, die ein Herauslösen der Steckverbindungsfortsätze aus den Aufnahmen verhindert. Zumindest soll erreicht werden, dass dies nicht unbeabsichtigt geschieht.

Dies führt hin zu einem weiteren Aspekt der Erfindung, nämlich der Überlegung, dass der verwendete Haftstreifen ermöglichen soll, die Steckverbindung wieder zu lösen, sofern hier beispielsweise beim Verlegen der Unterlagsdämmbeläge eine Korrektur vorgenommen werden soll. Daher handelt es sich bei den für den Haftstreifen verwendeten Klebstoffen um einen sogenannten Releaseklebstoff bspw. auf Acrylatbasis oder Kautschukbasis, der sich dadurch auszeichnet, dass die Verbindung der Steckverbindungsfortsätze in die Aufnahmen der Steckverbindung lösbar gestaltet ist.

Die Haftung ist hierfür so gewählt, dass ein unbeabsichtigtes Ablösen der eingreifenden Fortsätze aus den Steckverbindungensaufnahmen nicht erfolgt, geleichzeitig aber bei entsprechendem Anheben der Fortsätze aus den Steckverbindungen diese auch wieder von den Oberflächen der Haftstreifen abgelöst bzw. abgezogen werden können. So bleibt die Ablösbarkeit der Unterlagsdämmbelagelemente voneinander gewährleistet.

Es ist hierbei bei einer zweckmäßigen Ausbildung der Erfindung vorgesehen, die Haftstreifen rückseitig auf den Unterlagsdämmbelagelementen durchgehend anzuordnen, wobei hier die Aufbringung dieser Heftstreifen bereits bei der Produktion der Unterlagsdämmbeläge automatisiert und kontinuierlich erfolgt. Es ist auf diese Weise eine vereinfachte Produktion dieser Unterlagsdämmbeläge mit den rückseitigen Haftstreifen möglich, da auch bei der kontinuierlichen Produktion insbesondere für die Verpackung als Rollenware nur ein durchgängiger Haftstreifen rückseitig zu platzieren ist, der mit seiner haftenden Oberfläche lediglich im Bereich der Aufnahmen der Steckverbindungen frei bleibt und in den Bereichen der Fortsätze und an der Rückseite der Unterlagsdämmbeläge auf dem eigentlichen Dämmmaterial verklebt ist.

Der Haftstreifen wird gebildet aus einem Trägermaterial, auf dem einseitig der Releaseklebstoff aufgebracht ist, so dass auf der zum Unterboden weisenden Unterseite eine glatte Fläche des Haftstreifens, beispielsweise durch Silikonisierung, besteht und die nach oben zum Oberboden ausgerichtete Oberseite des Haftstreifens den Releaseklebstoff trägt und zu einem Teil auf der Unterseite des Unterlagsdämmbelagelementes und den randständig daran angeordneten Fortsätzen der Steckverbindung aufgeklebt ist und zum anderen Teil als freie klebende Fläche in den Aufnahmen der seitlichen Steckverbindung verläuft. Hier stellt diese beim Zusammenfügen der Steckverbindung die lösbare Verbindung mit der Unterfläche der in diese Aufnahmen eingreifenden Fortsätze der Steckverbindung eines benachbarten Unterlagsdämmbelagelementes her.

Die Unterlagsdämmbelagelemente sind zudem nach der Erfindung im Bereich der Anordnung der Haftstreifen unterseitig mit einem Permanentklebstoff zumindest partiell beschichtet sind, um eine permanente Haftverbindung zwischen den Haftstreifen und der Unterseite des Unterlagsdämmbelagelementes zu bewirken. Hintergrund dieser erfindungsgemäßen Gestaltung ist die Sicherung des Haftstreifens gegen ein unbeabsichtigtes Ablösen. Gerade im Falle einer mehrfachen Verbindung und Ablösung des Releaseklebstoffes in den Aufnahmen der Steckverbindung mit darin eingreifenden Fortsätzen beim Verlegen der Unterlagsdämmbelagelemente kann es ansonsten zu einem Abheben des Haftstreifens kommen, was der leichten Handhabbarkeit der Unterlagsdämmbelagelemente entgegenwirkt. Daher wird die permanente Verklebung zusätzlich zur Releaseverklebung in den Bereichen der Verbindung mit der Unterseite der Unterlagsdämmbelagelemente vorgenommen.

In einer zweckmäßigen Bauform der Erfindung erfolgt diese Verklebung durch einen oder mehrere streifenförmig aufgebrachte Klebstoffaufträge seitlich der Aufnahmen der Steckverbindung.

Schließlich ist eine relevante technische Komponente für die vorliegende Lösung, dass die Aufnahmen der Steckverbindungen derart dimensioniert sind, dass die hinter diesen Aufnahmen verlaufenden Haftstreifen eine ausreichende Spannung aufweisen, um ein aufeinander Festkleben je nach Verpackungseinheit zu vermeiden. Insbesondere bei Faltplatten wäre es problematisch, wenn die sich gegenüberliegenden Aussparungen mit den dahinter angeordneten Haftstreifen dazu führen, dass diese Haftstreifen mit ihren sich gegenüberliegenden Klebeflächen einander berühren und so miteinander verkleben, dass ein Auseinanderfalten der Haftplatten dadurch stark behindert würde bzw. die Haftstreifen beschädigt werden.

Durch eine in Abhängigkeit des verwendeten Trägermaterials des Haftstreifens gewählte Dimensionierung der Aufnahmen wird hierbei im Verhältnis zur Eigenspannung der Haftstreifen erreicht, dass diese nicht zu einem Durchhängen des Haftstreifens in den Aufnahmen führen, wie dies bei zu groß dimensionierten Aufnahmen leicht eintreten könnte, beispielsweise beim Aufeinanderpressen der Faltplatten in der Verpackung. D.h., diese Lösung macht es erforderlich, die Aufnahmen so schmal auszubilden, dass die Haftstreifen in den Aufnahmen eine ausreichende Spannung aufweisen.

Eine beispielhafte bauliche Variante der Erfindung ist ein als Faltplatte ausgebildetes Unterlagsdämmbelagelement aus geschäumtem Kunststoff der Stärke von 1-2mm (geeignet unter Vinylböden), an dessen beiden Längskanten eine Steckverbindung gebildet aus alternierend angeordneten Aufnahmen und Fortsätzen verläuft. Als Kunststoff sind z.B. solche auf Polystyrolschaumbasis (EPS,XPS), Polyethylenschaum (PE,XLPE) Polypropylenschaum (PP, XLPP) sowie Polyersterschäume (PET) zur Verwendung geeignet. Grundsätzlich ist hier auch die Bauform als Einzelne Platte wie auch als Rollenware mit diesen und den folgenden Merkmalen vorgesehen.

Lediglich an einer dieser Steckverbindungslängskanten ist hinter der Steckverbindung ein durchgängiger Haftstreifen angeordnet, der mit seiner ersten äußeren Längskante bis zur Außenkante der Steckverbindung reicht und mit seiner zweiten inneren Längskante sich über die Tiefe der Aufnahmen hinweg auf die Unterfläche des Unterlagsdämmbelagelementes erstreckt. Das heißt, ein erster Teil des Haftstreifens verläuft unterseitig als durchgängig flächiger Streifen auf der Unterfläche des Unterlagsdämmbelagelementes, ein zweiter Teil flächig unter den Fortsätzen der Steckverbindung und ein dritter Teil mit der Oberseite des Haftstreifens freiliegend in den Aufnahmen der Steckverbindung.

Der genannte erste Teil des Haftstreifens ist mittels streifenartig aufgebrachten Permanentklebstoffes auf der Unterseite des Unterlagsdämmbelagelementes verklebt, wobei drei parallele Streifen eines Schmelzklebers auf Kautschukbasis angeordnet sind. Auf diese Weise ist in der Summe in etwa ein Auftragsgewicht des Klebers von 0,5 Gramm je laufendem Meter aufgebracht.

Als Haftstreifen wird ein PET liner von etwa 23µ Stärke verwendet in einer Breite von ca. 25 mm. Dieser ist auf seiner glatten Rückseite silikonisiert und trägt eine Releaseklebstoffbeschichtung von ca. 35 Gramm je m². Technisch ist hier vorteilhaft, dass der PET liner eine hohe Reißfestigkeit aufweist. Dadurch bleibt gewährleistet, dass der Haftstreifen in der Lage ist, bei Faltplatten im Bereich der Falz das Dämmmaterial zu komprimieren ohne zu reißen. Gleichzeitig weist er eine Spannung auf, die ein Verkleben sich gegenüberliegender Klebeabschnitte des Haftstreifens bei der verpackten Faltplatte sicher verhindert.

Die Steckverbindung ist hierbei gebildet aus einer alternierenden Abfolge von Fortsätzen und Aufnahmen, die in etwa eine Breite von 3 cm aufweisen, wobei die Tiefe der Aufnahmen etwa 1,5 cm beträgt. Es hat sich hierbei erwiesen, dass durch diese Dimensionierung ein ungewolltes Verkleben sich gegenüberliegender Abschnitte der Haftstreifen in den Aufnahmen vermieden werden kann in Kombination mit Haftstreifen, die ein Trägermaterial in etwa wie oben beschrieben aufweisen.

Ein vorteilhafter Aspekt der Erfindung liegt zudem darin, dass die Produktion der Unterlagsdämmbelagelemente kontinuierlich erfolgen kann, wobei nach der Produktion der Unterlagsdämmbelagelemente die Steckverbindungen ausgestanzt werden und abschließend der Haftstreifen aufgebracht wird. Dies kann so erfolgen, dass erst der Permant-Klebstoff mittels eines Schmelzkleber-Auftragkopfes streifenförmig auf der Unterseite der Unterlagsdämmbelagelemente unterhalb der Aufnahmen aufgebracht wird. Dann wird der Haftstreifen von einer Spule abgerollt, parallel zur Längskante der Steckverbindung positioniert und mittels einer Andruckrolle im Bereich der Steckverbindung befestigt.

Es ist hierbei zweckmäßig, den Auftrag des Permanentklebstoffes in mehreren parallelen Streifen vorzunehmen, wodurch eine flächige Verklebung erreicht wird bei einem geringen Auftragsgewicht.

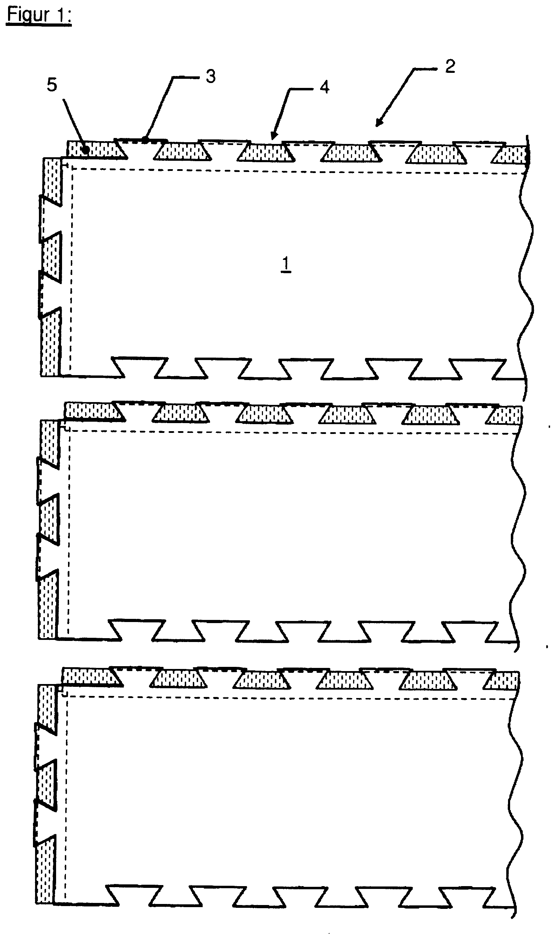

Nachfolgend soll die Erfindung anhand von Figuren näher beschrieben werden. Es zeigen
- Figur 1: eine Draufsicht auf nebeneinander angeordnete Unterlagsdämmbelagelemente 1 mit seitlich umlaufenden Steckverbindungen 2,
- Figur 2: den Knickabschnitt einer Faltplatte im Bereich des Haftstreifens 5 sowie
- Figur 3: eine seitliche Ansicht auf gefaltet verpackte Unterlagsdämmbeläge 1 mit Haftstreifen 5 und Blick in die Aufnahmen 4.

Die Draufsicht auf die nebeneinander angeordneten Unterlagsdämmbeläge 1 soll hierbei lediglich schematisch verdeutlichen, wie die Verbindungen durch die Anordnung der Haftstreifen 5 im Bereich der Steckverbindungen 2 erfolgen soll. Es ist hierbei eine Lösung offenbart, bei der an einer Längs- und einer Querkante der Unterlagsdämmbelagelemente 1 Steckverbindungen 2 in Form von Fortsätzen 3 angeordnet sind, die in entsprechend gegenüber liegende Aufnahmen 4 eingreifen.

Es handelt sich hierbei um seitlich gestanzte Unterlagsdämmbelagelemente 1, wobei immer abwechselnd ein Fortsatz 3 und eine Aufnahme 4 angeordnet sind, wobei zwei Fortsätze 3 jeweils eine Aufnahme 4 zwischen sich einschließen. Es ist hierbei erkennbar, dass Haftstreifen 5 hinter den Fortsätzen 3 und Aufnahmen 4 als durchgängige Streifen auf der Rückseite der Unterlagsdämmbelagelemente 1 verlaufen, wobei die Befestigung des Haftstreifens 5 an dem Unterlagsdämmbelagelement 1 sowohl an der Unterlagsdämmbelagelemente 1 als auch rückseitig an den Fortsätzen 3 erfolgt.

In den Aufnahmen 4 verbleibt somit der Haftstreifen 5 frei mit einer nach oben weisenden haftenden Oberseite. Wird nun ein gegenüberliegendes Unterlagsdämmbelagelement 1 in diese Aufnahmen 4 mit Hilfe der Fortsätze 3 eingelegt, so kleben die Fortsätze 3 mit ihrer Unterseite auf der Oberseite des Haftstreifens 5 auf und verbinden somit die Unterlagsdämmbeläge lösbar miteinander, wodurch ein sicherer Halt der miteinander verbundenen Unterlagsdämmbelagelemente 1 sicher gewährleistet ist.

Es soll hierbei betont werden, dass die Formgebung von Aufnahmen 4 und Fortsätze 3 in den vorliegenden Zeichnungen lediglich beispielhaft gewählt sind. Sowohl die kantige Kontur der Fortsätze 3 und Aufnahmen 4, wie auch deren Breite und Höhe können in der Ausführung der Erfindung variieren und sind hierbei lediglich beispielhaft dargestellt.

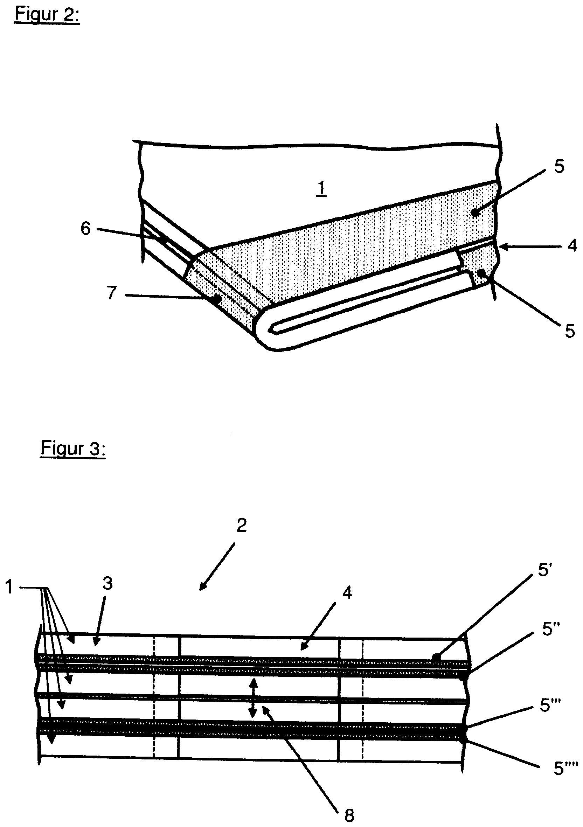

Figur 2 zeigt eine spezielle Ausführung der Unterlagsdämmbelagelemente 1 in Form von Faltplatten, bei denen jeweils plattenförmige Dämmbelagselemente 1 zieharmonikaartig übereinander gefaltet angeboten werden und bei Verlegung der Unterlagsdämmbeläge 1 auseinandergefaltet und flach auf dem Boden ausgebreitet werden.

Es ist hier in Figur 2 lediglich ausschnitthaft ein Knickbereich von einer solchen Faltplatte dargestellt mit dem erfindungsgemäßen Haftstreifen 5, der im Bereich der Falz der Platte um 180 Grad mitgefaltet wird. Hieraus ergibt sich, dass im Bereich dieser Falz ein Falzabschnitt 7 besteht, in dem das Dämmmaterial durch den Haftstreifen 5 komprimiert wird, was bei den zur Dämmung verwendeten geschäumten Kunststoffen in der Regel unproblematisch ist.

Alternativ kann das Trägermaterial des Haftstreifens 5 eine Elastizität aufweisen, die eine Aufdehnung in diesem Falzbereich 7 ermöglicht und somit weder das Falten der Unterlagsdämmbelagelemente 1 durch eine zu große Spannung verhindert, noch den Haftstreifen 5 oder den Dämmbelag an dieser Stelle beschädigt.

In Figur 2 ist ebenfalls zu erkennen, dass beim Falten der einzelnen Unterlagsdämmbelagelemente 1 die Aufnahmen 4 in den Steckverbindungen 2 gegenüberliegend angeordnet sind, wodurch die freien Bereiche der Haftstreifen 5 sich gegenüberliegend angeordnet sind. Dieser Sachverhalt macht es erforderlich, dass sichergestellt ist, dass das Trägermaterial ausreichend Spannung aufweist, um zu vermeiden, dass die freien Bereiche der Haftstreifen 5 innerhalb der Aufnahmen 4 mit gegenüberliegenden freien Abschnitten der Haftstreifen 5 in Berührung kommen. Dies ist durch die Wahl des einseitig silikonisierten PET Liners der Stärke von etwa 23µ gewährleistet.

Dies ist auch in der Darstellung der Figur 3 verdeutlicht. Hier sind vier übereinander angeordnete Unterlagsdämmbelagelemente 1 aufeinander gefaltet dargestellt. Es sind hierbei links und rechts Abschnitte der Fortsätze 3 erkennbar und mittig die Aufnahme 4 in seitlicher Ansicht.

Die Haftstreifen 5 sind beim obersten Unterlagsdämmbelagelement 1 unterseitig angeordnet, weshalb die haftende Oberfläche des Haftstreifens 5' hier nach oben weist. Das zweite Unterlagsdämmbelagelement 1 von oben liegt mit der nicht klebenden Rückseite des Haftstreifens 5" nach oben weisend an der Unterseite des darüber angeordneten Haftstreifens 5' an, wobei es sich hierbei jeweils um aneinander liegende Unterseiten der Haftstreifen 5', 5" handelt, die nicht miteinander verkleben können. Hierzu sind die Haftstreifen Rückseitig mit einer Silikonbeschichtung versehen, welche eine nicht haftende Oberfläche ermöglicht.

Die klebende Oberfläche des Haftstreifens (5) weist hierbei bei dem Haftstreifen 5" nach unten in die Aufnahme 4 hinein. Das dritte Unterlagsdämmbelagelement 1 von oben ist wie das erste Unterlagsdämmbelagelement 1 von oben angeordnet, nämlich mit einem unterseitigen Haftstreifen 5, dessen haftende Fläche in der Aufnahme 4 nach oben weist. Somit liegen sich hier die Haftstreifen 5" und 5"' in der durch einen Pfeil dargestellten Distanz 8 mit ihren haftenden Flächen gegenüber, weshalb sichergestellt werden muss, dass hier die Haftstreifen 5 ausreichend steif sind, um sich nicht in den freien Bereich der Aufnahme 4 durchzubiegen und somit miteinander in Berührung zu kommen. Das unterste Unterlagsdämmbelagelement 1 ist wiederum wie das zweite Element von oben mit der klebenden Oberseite des Haftstreifens 5"" nach unten weisend angeordnet.

In der Praxis kommt es bei der Verpackungseinheit in Form von Falzplatten zu einer Vielzahl derartiger Anordnungen von Elementen parallel übereinander, die zudem von einer Folienumverpackung leicht komprimiert werden. Daher ist es elementar wichtig, dass hier die haftenden Oberflächen der Haftstreifen 5 in den Aufnahmen 4 eine sichere Distanz 8 voneinander aufweisen.

Die Darstellung in Figur 3 ist zur Verdeutlichung insofern vereinfacht dargestellt, dass die Schichtstärken der Unterlagsdämmbelagelemente 1 nicht in korrekter Relation zur Schichtstärke der Haftstreifen 5 stehen, die deutlich dünner ausgeführt sind.

## Patentansprüche

1. Unterlagsdämmbelagelement (1) zur Anordnung zwischen einem Unterboden und darauf verlegten begehbaren Bodenbelägen umfassend ein Dämmmaterial mit einer Steckverbindung (2) an zumindest zwei Seiten der Unterlagsdämmbelagelemente (1) zur lückenlosen und flächigen Verbindung der Unterlagsdämmbelagelemente (1) zu einem flächigen Unterlagsdämmbelag, wobei die Steckverbindung (2) aus alternierend angeordneten Aufnahmen (4) und Fortsätzen (3) besteht,
**dadurch gekennzeichnet, dass**
- an zumindest einer Seite der Unterlagsdämmbelagelemente (1) ein Haftstreifen (5) an der Unterseite des Unterlagsdämmbelagselementes (1) im Bereich der Steckverbindung (2)angeordnet ist,
- sodass die haftende Oberfläche dieses Haftstreifens (5) zumindest teilweise in den Aufnahmen (4) der Steckverbindungen (2) nach oben weisend angeordnet ist und so dazu geeignet ist, flächig mit den Unterseiten der eingesteckten Fortsätze (3) eines benachbarten Unterlagsdämmbelagelementes (1) in Berührung zu stehen,
- wobei der Haftstreifen (5) aus einem Trägermaterial besteht, welches mit einem Release-Klebstoff beschichtet ist und
- die Unterlagsdämmbelagelemente (1) im Bereich der Anordnung der Haftstreifen (5) unterseitig mit einem Permanentklebstoff zumindest partiell beschichtet sind, um eine permanente Haftverbindung zwischen den Haftstreifen (5) und der Unterseite des Unterlagsdämmbelagelemtes (1) zu bewirken.

2. Unterlagsdämmbelagelement nach Anspruch 1,
**dadurch gekennzeichnet, dass**
der verwendete Haftstreifen (5) mit einem Releaseklebstoff basierend auf thermoplastischem Kautschuk versehen ist, der mit einem Auftragsgewicht von 20 - 50g je Quadratmeter auf dem Trägermaterial aufgebracht ist, um eine mehrfache Verbindung mit dem eingreifenden Fortsatz (3) der Steckverbindung (2) zu ermöglichen.

3. Unterlagsdämmbelagelement nach Anspruch 1 oder 2,
**dadurch gekennzeichnet, dass**
die Unterlagsdämmbelagelemente (1) rückseitig durchgehend mit den Haftstreifen (5) im Bereich der Steckverbindung (2) beschichtet sind.

4. Unterlagsdämmbelagelement nach Anspruch einem der vorangegangenen Ansprüche,
**dadurch gekennzeichnet, dass**
das Unterlagsdämmbelagelement (1) eine Stärke zwischen 1 und 5 mm aufweist.

5. Unterlagsdämmbelagelement nach einem der vorangegangenen Ansprüche,
**dadurch gekennzeichnet, dass**
das Trägermaterial des Haftstreifens (5) ein PET-Liner in der Stärke von etwa 23µ ist.

6. Unterlagsdämmbelagelement nach einem der vorangegangenen Ansprüche,
**dadurch gekennzeichnet, dass**
die Breite der Aufnahmen (4) der Steckverbindungen (2) in etwa 3 cm und die Tiefe der Aufnahmen (4) in etwa 1,5 cm bemisst angepasst an der Elastizität des Trägermaterials des Haftstreifens (5), um zu erreichen, dass eine Berührung der sich gegenüberliegenden Haftstreifenbereiche sicher vermieden werden kann.

7. Unterlagsdämmbelagelement nach einem der vorangegangenen Ansprüche,
**dadurch gekennzeichnet, dass**
als permanent Klebstoff zur Befestigung des Haftstreifens (5) an der Unterseite des Unterlagsdämmbelagelementes (1) ein Schmelzklebstoff basierend auf thermoplastischem Kautschuk verwendet wird, der streifenförmig auf der Unterseite des Unterlagsdämmbelagelementes (1)angeordnet ist.

8. Unterlagsdämmbelagelement nach Anspruch 6
**dadurch gekennzeichnet, dass**
der Permanentklebstoff in drei in etwa parallel zueinander verlaufenden Streifen auf der Unterseite des Unterlagsdämmbelagelementes (1) aufgesprüht ist, wobei das Auftragsgewicht in etwa in der Summe dieser drei Streifen 0,5g pro laufendem Meter beträgt.

9. Verfahren zur Herstellung von Unterlagsdämmbelagelementen (1) gemäß einem der vorangegangenen Ansprüche, umfassend die Verfahrensschritte:
- Bereitstellen eines Dämmmaterials,
- Ausstanzen von Steckverbindungen (2) bestehend aus alternierend angeordneten Fortsätzen (3) und Aufnahmen (4) zumindest an zwei parallelen Längskanten des Dämmmaterials,
- streifenförmiger Auftrag eines Permanentklebstoffes durch einen Auftragskopf für Schmelzkleber sowie
- Aufkaschieren des Haftstreifens (5) über die Steckverbindungen (2) und den in diesem Bereich aufgebrachten Permanentklebstoff,
- wobei der Haftstreifen (5) aus einem Trägermaterial besteht, welches mit einem Release-Klebstoff beschichtet ist, und die haftende Oberfläche dieses Haftstreifens (5) zumindest teilweise in den Aufnahmen (4) der Steckverbindungen (2) derart nach oben weisend angeordnet ist, dass er dazu geeignet ist, flächig mit der Unterseite der eingesteckten Fortsätze (3) eines benachbarten Unterlagsdämmbelagelementes (1) in Berührung zu stehen.

10. Verfahren zur Herstellung von Unterlagsdämmbelagelementen (1) gemäß dem vorangegangenen Anspruch 9, **dadurch gekennzeichnet dass**,
der Permanentklebstoff in mehreren in etwa parallelen Streifen unmittelbar unterhalb der Aufnahmen (4) parallel zur Längskante des Unterlagsdämmbelagelementes (1) angeordnet ist.

11. Verfahren zur Herstellung von Unterlagsdämmbelagelementen (1) gemäß Anspruch 9 oder 10, **dadurch gekennzeichnet dass**,
das Aufkaschieren des Haftstreifens (5) über die Steckverbindungen (2) durch kontinuierliches Abrollen des Haftstreifens (5) von einer Spule und gleichzeitiges Andrücken an den aufgebrachten Permanentklebstoff mittels einer Andrückrolle erfolgt.

## Claims

1. Insulating underlay element (1) for arranging between a subfloor and walkable floor coverings laid thereon, comprising an insulating material having a push-in connection (2) on at least two sides of the insulating underlay element (1) for connecting the insulating underlay elements (1) to form an extensive insulating underlay in a gap-free and extensive manner, wherein the push-in connection (2) consists of alternately arranged receptacles (4) and protrusions (3),
**characterized in that**,
- on at least one side of the insulating underlay elements (1), an adhesive strip (5) is arranged on the underside of the insulating underlay element (1) in the region of the push-in connection (2),
- such that the adhesive surface of this adhesive strip (5) is arranged in a manner facing upward at least partially in the receptacles (4) of the push-in connections (2) and is thus suitable for being in extensive contact with the undersides of the pushed-in protrusions (3) of an adjacent insulating underlay element(1),
- wherein the adhesive strip (5) consists of a backing material which is coated with a release adhesive, and
- the insulating underlay elements (1) being at least partially coated on their underside with a permanent adhesive in the region of the arrangement of the adhesive strips (5) in order to bring about a permanent adhesive connection between the adhesive strips (5) and the underside of the insulating underlay element (1).

2. Insulating underlay element according to Claim 1,
**characterized in that**
the adhesive strip (5) used is provided with a release adhesive based on thermoplastic rubber, which is applied to the backing material with a coating weight of 20-50 g per square meter in order to allow a multiple connection to the engaging protrusion (3) of the push-in connection (2).

3. Insulating underlay element according to Claim 1 or 2,
**characterized in that**
the insulating underlay elements (1) are coated continuously with the adhesive strips (5) on their rear side in the region of the push-in connection (2) .

4. Insulating underlay element according to Claim one of the preceding claims,
**characterized in that**
The insulating underlay element (1) has a thickness of between 1 and 5 mm.

5. Insulating underlay element according to one of the preceding claims,
**characterized in that**
the backing material of the adhesive strip (5) is a PET liner with a thickness of about 23 µ.

6. Insulating underlay element according to one of the preceding claims,
**characterized in that**
the width of the receptacles (4) of the push-in connections (2) measures about 3 cm and the depth of the receptacles (4) about 1.5 cm, adapted to the elasticity of the backing material of the adhesive strip (5), in order to ensure that contact between the opposing adhesive-strip regions can be reliably avoided.

7. Insulating underlay element according to one of the preceding claims,
**characterized in that**
a hotmelt adhesive based on thermoplastic rubber that is arranged in strips on the underside of the insulating underlay element (1) is used as permanent adhesive for fastening the adhesive strip (5) to the underside of the insulating underlay element (1).

8. Insulating underlay element according to Claim 6,
**characterized in that**
the permanent adhesive is sprayed onto the underside of the insulating underlay element (1) in three strips extending approximately parallel to one another, the total coating weight of these three strips being approximately 0.5 g per meter.

9. Method for producing insulating underlay elements (1) according to one of the preceding claims, comprising the method steps of:
- providing an insulating material,
- punching out push-in connections (2) consisting of alternately arranged protrusions (3) and receptacles (4) at least along two parallel longitudinal edges of the insulating material,
- applying a permanent adhesive in strips using an application head for hotmelt adhesive, and
- laminating the adhesive strip (5) over the push-in connections (2) and the permanent adhesive applied in this region,
- wherein the adhesive strip (5) consists of a backing material which is coated with a release adhesive, and the adhesive surface of this adhesive strip (5) is arranged in a manner facing upward at least partially in the receptacles (4) of the push-in connections (2) such that it is suitable for being in extensive contact with the underside of the pushed-in protrusions (3) of an adjacent insulating underlay element(1).

10. Method for producing insulating underlay elements (1) according to the preceding Claim 9,
**characterized in that**
the permanent adhesive is arranged in a plurality of approximately parallel strips immediately beneath the receptacles (4) parallel to the longitudinal edge of the insulating underlay element (1).

11. Method for producing insulating underlay elements (1) according to Claim 9 or 10,
**characterized in that**
the adhesive strip (5) is laminated over the push-in connections (2) by continuously unrolling the adhesive strip (5) from a reel and simultaneously pressing it onto the applied permanent adhesive by means of a pressure roller.

## Revendications

1. Elément de sous-couche d'isolation (1) à disposer entre un plancher et des revêtements de sol accessibles posés sur celui-ci, comprenant un matériau isolant avec un raccord (2) sur au moins deux côtés des éléments de sous-couche d'isolation (1) pour l'assemblage ininterrompu et plat des éléments de sous-couche d'isolation (1) en un revêtement de sous-couche d'isolation plat, dans lequel le raccord (2) se compose de logements (4) et de saillies (3) disposé(e)s en alternance,
**caractérisé en ce que**
- une bande adhésive (5) est agencée sur le côté inférieur de l'élément de sous-couche d'isolation (1) dans la région du raccord (2) sur au moins un côté de l'élément de sous-couche d'isolation (1),
- de telle manière que la surface adhésive de cette bande adhésive (5) soit disposée au moins en partie dans les logements (4) du raccord (2) en étant orientée vers le haut et convienne ainsi pour venir en contact à plat avec les côtés inférieurs des saillies engagées (3) d'un élément de sous-couche d'isolation voisin (1),
- dans lequel la bande adhésive (5) se compose d'un matériau de support, qui est revêtu d'une colle décollable, et
- les éléments de sous-couche d'isolation (1) sont revêtus au moins partiellement sur le côté inférieur, dans la région de l'agencement des bandes adhésives (5), d'une colle permanente afin de réaliser une liaison adhésive permanente entre les bandes adhésives (5) et le côté inférieur de l'élément de sous-couche d'isolation (1).

2. Elément de sous-couche d'isolation selon la revendication 1, **caractérisé en ce que** la bande adhésive utilisée (5) est munie d'une colle décollable à base de caoutchouc thermoplastique, qui est déposée sur le matériau de base à raison d'un poids déposé de 20 - 50 g par mètre carré, afin de permettre un assemblage multiple avec une saillie engagée (3) du raccord (2).

3. Elément de sous-couche d'isolation selon la revendication 1 ou 2, **caractérisé en ce que** les éléments de sous-couche d'isolation (1) sont revêtus de façon continue au dos avec les bandes adhésives (5) dans la région du raccord (2).

4. Elément de sous-couche d'isolation selon la revendication l'une quelconque des revendications précédentes, **caractérisé en ce que** l'élément de sous-couche d'isolation (1) présente une épaisseur comprise entre 1 et 5 mm.

5. Elément de sous-couche d'isolation selon l'une quelconque des revendications précédentes, **caractérisé en ce que** le matériau de support de la bande adhésive (5) est une doublure en PET d'une épaisseur d'environ 23 µ.

6. Elément de sous-couche d'isolation selon l'une quelconque des revendications précédentes, **caractérisé en ce que** la largeur des logements (4) des raccords (2) vaut environ 3 cm et la profondeur des logements (4) vaut environ 1,5 cm, adaptées à l'élasticité du matériau de support de la bande adhésive (5), afin d'assurer qu'un contact des régions de bande adhésive opposées puisse être évité.

7. Elément de sous-couche d'isolation selon l'une quelconque des revendications précédentes, **caractérisé en ce que** l'on utilise comme colle permanente pour la fixation de la bande adhésive (5) sur le côté inférieur de l'élément de sous-couche d'isolation (1) une colle fusible à base de caoutchouc thermoplastique, qui est disposée sous forme de bandes sur le côté inférieur de l'élément de sous-couche d'isolation (1).

8. Elément de sous-couche d'isolation selon la revendication 6, **caractérisé en ce que** la colle permanente est projetée en trois bandes s'étendant environ parallèlement l'une à l'autre sur le côté inférieur de l'élément de sous-couche d'isolation (1), dans lequel le poids déposé pour la somme de ces trois bandes vaut environ 0,5 g par mètre courant.

9. Procédé de fabrication d'éléments de sous-couche d'isolation (1) selon l'une quelconque des revendications précédentes, comprenant les étapes suivantes:
- préparer un matériau isolant,
- découper des raccords (2) composés de saillies (3) et de logements (4) disposé(e)s en alternance au moins sur deux côtés longitudinaux parallèles du matériau isolant,
- déposer en bandes une colle permanente au moyen d'une tête de dépôt de colle fusible, ainsi que
- contre-coller la bande adhésive (5) sur les raccords (2) et sur la colle permanente déposée dans cette région,
- dans lequel la bande adhésive (5) se compose d'un matériau de support, qui est revêtu d'une colle décollable, et la surface adhésive de cette bande adhésive (5) est disposée au moins en partie dans les logements (4) du raccord (2) en étant orientée vers le haut, de telle manière qu'elle convienne pour être en contact à plat avec le côté inférieur des saillies engagées (3) d'un élément de sous-couche d'isolation voisin (1).

10. Procédé de fabrication d'éléments de sous-couche d'isolation (1) selon la revendication précédente 9, **caractérisé en ce que** la colle permanente est disposée en plusieurs bandes sensiblement parallèles directement en dessous des logements (4) parallèlement au côté longitudinal de l'élément de sous-couche d'isolation (1) .

11. Procédé de fabrication d'éléments de sous-couche d'isolation (1) selon la revendication 9 ou 10, **caractérisé en ce que** le contre-collage de la bande adhésive (5) sur les raccords (2) est effectué par déroulement continu de la bande adhésive (5) d'une bobine et application simultanée sur la colle permanente déposée, au moyen d'un rouleau de pression.
